Europäisches Patentamt

European Patent Office

Office européen des brevets

(19)

(11) **EP 0 596 954 B1**

(12) **EUROPÄISCHE PATENTSCHRIFT**

(45) Veröffentlichungstag und Bekanntmachung des Hinweises auf die Patenterteilung:
**08.10.1997 Patentblatt 1997/41**

(21) Anmeldenummer: **92916209.7**

(22) Anmeldetag: **22.07.1992**

(51) Int Cl.⁶: **G06F 13/40**

(86) Internationale Anmeldenummer:
**PCT/EP92/01662**

(87) Internationale Veröffentlichungsnummer:
**WO 93/03440 (18.02.1993 Gazette 1993/05)**

(54) **HOCHGESCHWINDIGKEITS-BUSSYSTEM UND VERFAHREN ZUM BETREIBEN DESSELBEN**

HIGH-SPEED BUS SYSTEM AND PROCESS FOR OPERATING SAME

SYSTEME DE BUS A HAUTE VITESSE ET SON PROCEDE D'EXPLOITATION

(84) Benannte Vertragsstaaten:
**AT BE CH DE DK ES FR GB GR IT LI NL SE**

(30) Priorität: **30.07.1991 DE 4125219**

(43) Veröffentlichungstag der Anmeldung:
**18.05.1994 Patentblatt 1994/20**

(73) Patentinhaber: **PEP MODULAR COMPUTERS AG
6300 Zug (CH)**

(72) Erfinder: **KREIDL, Josef
D-8950 Kaufbeuren (DE)**

(74) Vertreter: **Abitz, Walter, Dr.-Ing. et al
Patentanwälte Abitz & Partner
Postfach 86 01 09
81628 München (DE)**

(56) Entgegenhaltungen:
**EP-A- 0 228 124       EP-A- 0 270 896
US-A- 4 577 317**

**Beschreibung**

Die Erfindung betrifft ein Verfahren zum Betreiben eines Hochgeschwindigkeits-Bussystems und ferner ein Hochgeschwindigkeits-Bussystem zur Durchführung des Verfahrens unter Verwendung wenigstens eines Parallelbusses und wenigstens eines seriellen Busses.

Es sind bereits verschiedene Bussystem-Typen bekannt, die auch bereits standardisierte Bussysteme aufweisen, wie beispielsweise den VMEbus, der günstigerweise zwei Leerleitungen aufweist, die weder für einen Verbindungsaufbau noch für eine parallele Datenübertragung benutzt werden (SERDAT und SERCLK).

Der standardisierte parallel VMEbus ist in der Literaturstelle "The VMEbus specification" entsprechend ANSI/IEEE STD1014-1987, IEC821 und 297, der VMEbus International Trade Association, 10229 N. Scottsdale Road, Suite E, Scottsdale, AZ 85253, USA, (602) 951-8866, beschrieben.

Ein bekanntes Verfahren zur Durchführung eines schnellen Datentransfers ist das sogenannte Message Passing an parallelen Bussystemen. Dieses bekannte Verfahren ist jedoch mit gravierenden Nachteilen behaftet, da der Prallelbus dabei für die Zeit des Datentransfers belegt wird und darüber hinaus dieses bekannte Verfahren einen erheblichen Hardware-Aufwand erforderlich macht.

Aus der US-A-4 570 220 ist ein Hochgeschwindigkeits-Bussystem bekannt, bei dem wenigstens ein Parallelbus und wenigstens ein serieller Bus zur gleichzeitigen parallelen und seriellen Datenübertragung kombiniert werden, um serielle erste Daten über den wenigstens einen seriellen Bus und parallele zweite Daten über den wenigstens einen parallelen Bus gleichzeitig zu übertragen. Für sowohl den Verbindungsaufbau des seriellen Busses als auch den Verbindungsaufbau des parallelen Busses sind jeweils steuerbare Protokolle vorgesehen, so daß ein Verbindungsaufbau über den seriellen Bus vollkommen unabhängig von dem Verbindungsaufbau des parallelen Busses durchgeführt wird.

Aus der EP-A-0 270 896 ist ein Graphik-Terminal für ein Personal Computersystem bekannt, wobei die Datenübertragung zwischen einem Host-Computer und entfernten Terminals über eine serielle Datenübertragungsleitung erfolgt, wobei der Datentransfer mit einer Folge bzw. Geschwindigkeit gemäß 25MHz vorgenommen wird. Die serielle Datenübertragungsleitung besteht dabei aus einem Faseroptik-Duplexkabel, so daß also ein Faseroptik-Kabel für den Datentransfer von dem Host-Computer zu einem entfernten Terminal und ein weiteres Faseroptik-Kabel für den Datentransfer von dem entfernten Terminal zum Host-Computer vorgesehen ist.

Dieses bekannte System enthält ferner Einrichtungen, um parallele Daten in serielle Daten umzuwandeln.

Die der Erfindung zugrunde liegende Aufgabe besteht darin, ein Verfahren zum Betreiben eines Hochgeschwindigkeits-Bussystems und ein Hochgeschwindigkeits-Bussystem zur Durchführung dieses Verfahrens zu schaffen, welches eine wesentliche Erhöhung der Geschwindigkeit des Datentransfers, insbesondere auch bei Verwendung herkömmlicher Bussysteme ermöglicht und welches auch an sehr verschiedene Datentransferbedingungen angepaßt werden kann.

Zur Lösung dieser Aufgabe schafft die vorliegende Erfindung ein Verfahren zum Betreiben eines Hochgeschwindigkeits-Bussystems, bei dem wenigstens ein Parallelbus und wenigstens ein serieller Bus zur gleichzeitigen parallelen und seriellen Datenübertragung kombiniert werden, um serielle erste Daten über den wenigstens einen seriellen Bus und parallele zweite Daten über den wenigstens einen parallelen Bus gleichzeitig zu übertragen, wobei der serielle Datentransfer der ersten Daten nach einem Verbindungsaufbau abläuft und gleichzeitig parallel auf den Parallelbus die normale Übertragung der zweiten Daten und/oder Programmen durchgeführt wird und wobei der Verbindungsaufbau für sowohl die parallele als auch die serielle Datenübertragung unter Verwendung der dem parallelen Bus zugeordneten Logik erfolgt.

Das Verfahren zum Betreiben eines Hochgeschwindigkeits-Bussystems nach der vorliegenden Erfindung kann insbesondere auch bei bereits bestehenden bzw. standardisierten Bussystemen voll verwirklicht werden.

Das Verfahren nach der vorliegenden Erfindung kann im einzelnen derart ausgeführt werden, daß zu Beginn eines Verbindungsaufbaus gemäß einer Einzelübertragung (Datenwort) unter einer zugehörigen Adresse über den seriellen Bus, nach Selektierung eines angesprochenen Moduls und nach Übergabe einer Speicheradresse ein Freigabesignal (DTACK-Signal) von dem Modul zur sofortigen Freigabe des Parallelbusses erzeugt wird, um noch während der seriellen Datenübertragung den Parallelbus für eine von der seriellen Übertragung unabhängige, zeitlich parallel laufende Parallel-Übertragung von Daten bereit zu machen.

Das Verfahren nach der vorliegenden Erfindung kann ferner dadurch weiter ausgestaltet werden, daß zur Blockübertragung gemäß einem Protokoll die beim Verbindungsaufbau übertragenen parallelen Daten alle erforderlichen Informationen für den seriellen Transfer, wie Startadresse, Blocklänge usw. enthalten, wobei die Blockübertragung ausschließlich über den seriellen Bus erfolgt.

Die Erfindung schafft ferner ein Hochgeschwindigkeits-Bussystem, mit wenigstens einem Parallelbus und wenigstens einem seriellen Bus zur gleichzeitigen parallelen und seriellen Datenübertragung zwischen Teilnehmern, und mit einer dem wenigstens einen Parallelbus zugeordneten Logik, wobei der serielle Datentransfer nach einem Verbindungsaufbau abläuft und zeitlich parallel auf dem wenigstens einen Parallelbus die normale Übertragung von Daten und/oder Programmen durchgeführt wird.

Dieses Hochgeschwindigkeits-Bussystem ist dadurch gekennzeichnet, daß die Logik des wenigstens einen Parallelbusses dafür ausgebildet ist, einen Verbindungsaufbau für sowohl die parallele als auch die serielle Datenübertragung herzustellen.

Eine besonders vorteilhafte Ausführungsform des erfindungsgemäßen Hochgeschwindigkeits-Bussystems besteht darin, daß der Parallelbus aus einem standardisierten VME-Bus, einem standardisierten Futurebus oder einem Multibus II besteht und daß wenigstens einer der normalerweise nicht benutzten Leitungen dieser Busse einen seriellen Hochgeschwindigkeitsbus bildet. Mit anderen Worten werden erfindungsgemäß die in diesen standardisierten Bussen vorhandenen Leerleitungen als serielle Hochgeschwindigkeitsbusse eingesetzt. Sollten in einem solchen Bussystem keine "Leerleitungen" (Leitungen, die nicht für den Verbindungsaufbau und nicht für die Datenübertragung benutzt werden) vorhanden sein, so können diese einfach als Zusatzverbindungen geschaffen werden.

Insbesondere bei Verwenung bzw. Zusammenschalten mehrerer Bussysteme von mehreren Teilnehmern kann ein Hochgeschwindigkeits-Serien/Parallel- und Parallel/Serien-Wandler zwischen einem Parallelbus und einem seriellen Bus geschaltet werden.

Dieser Hochgeschwindigkeits-Serien/Parallel- und Parallel/Serien-Wandler weist erfingunsgemäß zwei Funktionsblöcke auf, von denen der eine Funktionsblock aus einem Prescaler, einem spannungsgesteuerten Oszillator und einer phasenstarren Schleife besteht und von denen der andere Funktionsblock eine interne Steuerlogik enthält, die u.a. ein Belegtsignal (BUSY) bei Belegung des seriellen Busses erzeugt.

Wenn also bei dem Hochgeschwindigkeits-Bussystem nach der vorliegenden Erfindung mehrere Teilnehmer für einen Datenaustausch kombiniert werden, so kann zweckmäßigerweise jeder der Teilnehmer mit einem derartigen Hochgeschwindigkeits-Serien/Parallel- und Parallel/Serien-Wandler ausgestattet sein. Die interne Steuerlogik jedes dieser Wandler ist dafür ausgebildet, im Falle einer Belegung des seriellen Busses ein Belegtsignal (BUSY) zu erzeugen und damit für sich selbst konkret zu erkennen, ob der Beginn eines eigenen Verbindungsaufbaus für die serielle Datenübertragung zulässig ist oder nicht.

Eine Hochgeschwindigkeitswandlung wird in dem genannten Wandler ferner auch dadurch begünstigt, daß die Empfangsdaten des anderen Funktionsblockes als Synchronisierdaten zur Synchronisierung der phasenstarren Schleife und des spannungsgesteuerten Oszillators an den einen Funktionsblock übertragbar sind.

Durch die vorliegende Erfindung wird somit der Vorteil erreicht, das vorhandene Verfahren der Datenübertragung für den Verbindungsaufbau benutzt werden, für die Übertragung selbst jedoch der serielle Transfer zeitgleich mit den normalen Datentransfer des Parallelbusses läuft. Während also der serielle Transfer mit dem Verbindungsaufbau läuft, kann auf dem Parallelbus eine weitere Übertragung von Daten und/oder Programmen durchgeführt werden. Dadurch ergibt sich eine Durchsatzerhöhung des gesamten Systems, und zwar additiv aus paralleler und serieller Übertragung. Durch die Verwendung der bereits vorhandenen Logik des Parallelbusses zum Verbindungsaufbau sowohl der parallelen als auch der seriellen Datenübertragung wird nur noch wenig Zusatzlogik zur Steuerung der seriellen Hochgeschwindigkeitsübertragung benötigt. Daher ist auch bei dem Hochgeschwindigkeits-Bussystem nach der vorliegenden Erfindung die Mischung von Baugruppen mit serieller und paralleler Übertragungsmöglichkeit mit Baugruppen mit nur parallelen Übertragungen möglich.

Eine in der Praxis besonders vorteilhaft realisierbare Ausführungsform besteht darin, daß der Hochgeschwindigkeits-Serien/-Parallel-und Parallel/Serien-Wandler zwei Funktionsblöcke aufweist, von denen der eine Funktionsblock einen verzögerungsfrei anschwingenden Start/Stop-Oszillator und von denen der andere Funktionsblock eine interne Steuerlogik enthält, die ein Belegtsignal bei Belegung des seriellen Busses erzeugt.

Der Start/Stop-Oszillator kann in der Praxis mit sehr wenigen Bauelementen realisiert werden und umfaßt beispielsweise ein steuerbares Gatter und eine Verzögerungsleitung, die mit ihrem einen Anschluß an den Ausgang des Gatters und die mit ihrem anderen Anschluß mit einem ersten Eingang des Gatters verbunden ist, wobei das Gatter an wenigstens einem zweiten Eingangsanschluß ein Steuersignal empfängt. Wenn an diesem zweiten Eingangsanschluß ein Steuersignal angelegt wird, so wird das genannte Gatter geöffnet, wobei der am Ausgang des Gatters entstehende Spannungssprung auch über die Verzögerungsleitung läuft und mit einer vorgegebenen Verzögerung am ersten Eingang des Gatters eintrifft, wodurch dann das Gatter geschlossen wird. Der dabei entstehende Spannungsabfall am Ausgang des Gatters läuft wiederum mit entsprechender Verzögerung über die Verzögerungsleitung zu dem ersten Eingang des Gatters, wodurch dieses wieder geöffnet wird, usw., so daß am Ausgang des Gatters eine Impulsfolge entsteht, die verzögerungsfrei eingeschaltet und auch verzögerungsfrei wieder ausgeschaltet werden kann.

Die zuvor erläuterte Wirkungsweise des Start/Stop-Oszillators läßt sich beispielsweise dann realisieren, wenn der mit dem anderen Anschluß der Verzögerungsleitung verbundene erste Eingangsanschluß des UND-Gatters ein Negations-Eingang ist und der wenigstens eine zweite Eingangsanschluß ein normaler nicht invertierender Eingang ist.

Die mit Hilfe dieses Start/Stop-Oszillators realisierbare Impulsfolgefrequenz hängt dabei im wesentlichen von der möglichen Schaltgeschwindigkeit des dabei verwendeten Gatters ab.

Mit Hilfe des Start/Stop-Oszillators ist eine Synchronisation eines Empfangs-Terminals mit einem Sendeterminal beispielsweise bequem dadurch zu realisieren, indem man dem zu übertragenden Datenfluß Synchronisierbits hinzufügt beispielsweise derart, daß jeweils nach der Übertragung eines Bytes ein Synchronisierimpuls bzw. Synchronisierbit eingefügt wird.

Die Verzögerungsleitung des Start/Stop-Oszillators kann zweckmäßigerweise als Leitungs- oder Leiterstreifen auf einer gedruckten Schaltungsplatte ausgebildet sein, wobei zur Erzielung einer Temperaturkompensation der betreffende Leitungsstreifen in einem meanderförmigen Muster angeordnet werden kann.

Um das genannte Steuersignal für den Start/Stop-Oszillator aus den Synchronisierbits zu gewinnen, ist ferner eine Aufbereitsschaltung vorhanden, welche aus einem einzelnen Synchronisierimpuls ein Steuersignal erzeugt, dessen zeitlicher Verlauf beispielsweise mit der Vorderflanke des Synchronisierimpulses beginnt und kurz nach dem Ende der Übertragung eines Bytes endet, so daß also der Start/Stop-Oszillator mit jedem neu auftretenden Synchonisierbit jeweils neu gestartet wird.

Der Start/Stop-Oszillator kann so ausgelegt sein, daß die von ihm erzeugte Impulsfolgefrequenz im Giga-Hertzbereich liegt, beispielsweise bei 1,8 GHz.

Eine weitere besonders vorteilhafte Ausgestaltung der Erfindung besteht schließlich in der Realisierung einer die Synchronsierimpulsfolge messenden Einrichtung, welche die Impulsfolgefrequenz der Synchroniserimpulse bzw. Synchronisierbits mit Hilfe der Oszillatorimpulse des Start/StopOszillators mißt und automatisch abhängig vom Messergebnis die Schiebetaktfrequenz einstellt.

Diese letztere Einrichtung kann ferner auch so betrieben werden, daß die Taktfrequenz des auszusendenden Signals bzw. Datenfolge in gewissen Stufen gewählt werden kann.

Um dies zu erreichen, umfaßt die die Synchronisierimpulsfolgefrequenz messende Einrichtung mehrere steuerbare Teilerstufen, deren Teilungsverhältnis bei Empfangsbetrieb automatisch auf die Folgefrequenz des empfangenen Signals und bei Sendebetrieb selektiv auf eine gewünschte Ausgabefrequenz eingestellt werden kann.

Im folgenden wird die Erfindung anhand von Ausführungsbeispielen unter Hinweis auf die Zeichnung näher erläutert. Es zeigen:

Fig. 1    ein Blockschaltbild eines Hochgeschwindigkeits-Serien/Parallel- und Parallel/ Serien-Wandlers;

Fig. 2    ein Blockschaltbild eines Ausführungsbeispiels zweier miteinander kommunizierender Terminals;

Fig. 3    eine weitere Ausführungsform eines Hochgeschwindigkeits-Serien/Parallel-und Parallel/Serien-Wandlers in Blockschaltform;

Fig. 4    ein Ausführungsbeispiel eines Start/Stop-Oszillators; und

Fig. 5    Signalwellenformen, die bei dem Blockschaltbild nach Fig. 3 auftreten bzw. erzeugt werden.

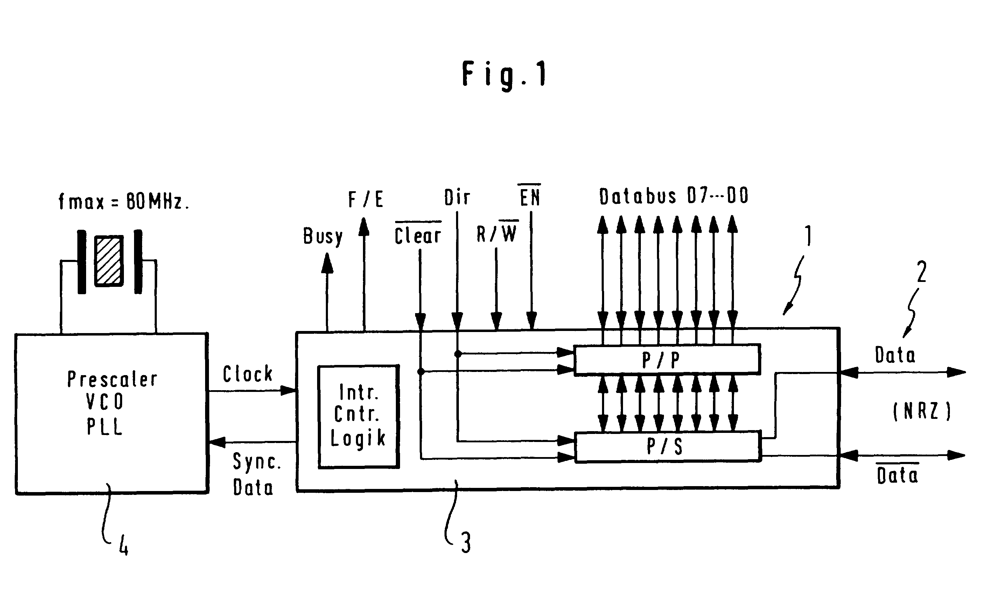

Gemäß Fig. 1 ist der Hochgeschwindigkeits-Serien/ Parallel-und Parallel/Serien-Wandler allgemein mit 1 bezeichnet und umfaßt zwei Funktionsblöcke 3 und 4, von denen der Funktionsblock 4 aus einem Prescaler, einem spannungsgesteuerten Oszillator (VCO) und einer phasenstarren Schleife (PLL) besteht. Der andere Funktionsblock 3 enthält neben einer internen Steuerlogik ein Zwischenregister P/P, welches die über einen Parallelbus D7...D0 zugeführten Daten bzw. Datenbytes aufnimmt, wobei dieses Zwischenregister P/P ein FIFO darstellt, um eine lückenlose Übertragungsmöglichkeit zu gewährleisten. Bei dem gezeigten Ausführungsbeispiel kann der Parallelbus beispielsweise eine Breite von 8 Bits haben (D0-D7) und kann aber auch erweitert werden auf eine beliebige Wortbreite. Aus dem genannten Zwischenregister P/P werden die Daten dann in ein Schieberegister P/S geladen und aus diesem mit der Taktfrequenz auf den Serienbus 2 geschoben.

Die zwei Funktionsblöcke 3 und 4 sind ferner über eine Leitung "Clock" miteinander verbunden, wobei die Leitung Clock dazu dient, den Schiebetakt für das serielle Senden oder Empfangen zu liefern. Bei dem gezeigten Ausführungsbeispiel besteht folgender Zusammenhang zwischen der verwendeten Quarzfrequenz und dem Taktsignal (Clock):

$$f_{clock} = n \times f_{max} \text{ (Quarz)},$$

wobei n in diesem Beispiel 40 ist. Es ergibt sich somit

| Quarzfrequenz: | 80 MHz | 40 MHz |
|---|---|---|
| Schiebetaktfrequenz: | 3,2 GHz | 1,6 GHz |

Die Empfangsdaten werden über Sync Data dem PLL und VCO zugeführt und dienen zur Erzeugung eines synchronen 1 : 1 Taktes.

Der gezeigte Wandler bietet insbesondere die Möglichkeit, die Datenbreite der parallelen Schnittstelle, welche seriell übertragen werden soll, frei wählen zu können, wobei ferner auch die Frequenz der parallelen Datenfolge frei wählbar ist.

Der gezeigte Wandler kann in beiden Richtungen betrieben werden, und zwar entweder vom Parallelbus zum seriellen Bus 2 oder vom seriellen Bus zum Parallelbus, wobei der erläuterte Datenpfad im letzteren Fall lediglich im umgekehrter Richtung benützt wird.

Bei dieser letzteren Übertragungsrichtung wird über DIR für die gesamte Übertragungsdauer die Datenrichtung am Wandler festgelegt, d.h. es erfolgt hiermit die Definition als Empfänger oder Sender.

Mit Hilfe von $\overline{EN}$ und R/$\overline{W}$ kann das Zwischenregister P/P beschrieben oder gelesen werden. Die Indikation, ob dieses Register P/P Daten enthält, zeigt das Signal F/$\overline{E}$ und ermöglicht damit einen lückenlosen seriellen Datentransfer in beiden Richtungen.

Mit Clear werden Register und die Steuerlogik in einen Ausgangszustand gesetzt.

Das bereits erwähnte Belegtsignal "BUSY" indiziert, daß eine serielle Übertragung läuft und ermöglich damit auch eine TIMEOUT-Überwachung aller seriellen Treiber.

Damit erkennt jedes Modul für sich konkret, ob es aktiv einen Verbindungsaufbau für eine serielle Datenübertragung einleiten kann oder nicht.

Der Hochgeschwindigkeits-Serien/Parallel- und Parallel/Serien-Wandler 1 kann im Hinblick auf die heutige Halbleitertechnologie umfangreich erweitert werden und alle Funktionen inclusive der Funktion des VCO und des PLL können auf einem monolithischen Baustein integriert werden.

Die von dem veranschaulichten Wandler 1 erzeugten oder empfangenen Signale sind wie folgt:

| | |
|---|---|
| DATA | Serielle Daten gerade |
| $\overline{DATA}$ | Serielle Daten invertiert Die Daten müssen bidirektional sein, um Sende- und Empfangsfunktion zu gewährleisten (NRZ) |
| $\overline{EN}$ | Funktion wie ein Chip Select Signal in einem Mikroprozessorsystem |
| R/$\overline{W}$ | Schreib-/Lesesignal für Datentransfer |
| DIR | Definiert die Richtung des seriellen Datenstroms |
| $\overline{CLEAR}$ | Eine logische Null an diesem Pin löscht alle Register (auf Null setzen) in asynchroner Weise |
| F/E | zeigt an, daß Empfangsregister voll ist oder Senderegister leer |
| BUSY | Indikation, daß Daten auf den seriellen Bus übertragen werden |
| CLOCK | Taktsignal für die interne Logik und die Erzeugung des seriellen Datenstromes. Ein positiver Clockpuls ergibt ein serielles Datenbit.<br>Maximale Clockfrequenz: 3,2 GHZ Arbeitsbereich: 1,6 oder 3,2 GHZ |
| SYNC DATA | Ausgangsdaten für den PLL-Teil, um auf das Clocksignal zu synchronisieren (vorwiegend während der Empfangsphase) |

Gemäß dem erfindungsgemäßen Verfahren zum Betreiben eines Hochgeschwindigkeits-Bussystems werden wenigstens ein Parallelbus und wenigstens ein serieller Bus miteinander kombiniert und das Verfahren kann beispielsweise derart durchgeführt werden, daß während eines Verbindungsaufbaus, wie er beispielsweise auf den Seiten 74 und 75 der eingangs genannten Druckschrift erläutert ist, gemäß einer Einzelübertragung bzw. Übertragung eines Datenwortes unter einer zugehörigen Adresse über den seriellen Bus, nach Selektierung eines angesprochenen Moduls und nach Übergabe einer Speicheradresse ein Freigabesignal (DTACK-Signal) von dem angesprochenen Modul zur sofortigen Freigabe des Parallelbusses erzeugt wird, um noch während der seriellen Datenübertragung den Parallelbus für eine unabhängige zeitlich parallel laufende Parallel-Übertragung vonm Daten bereitzumachen.

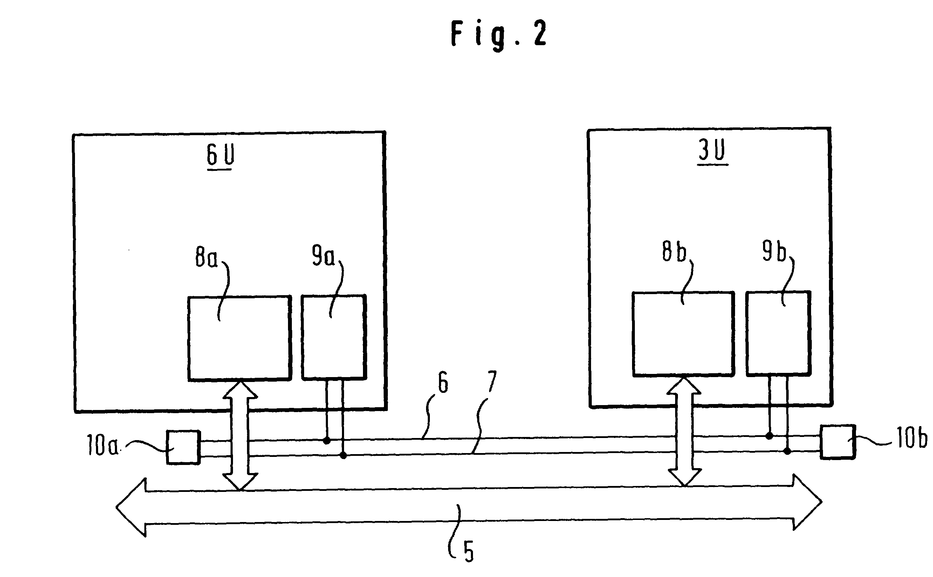

Fig. 2 zeigt ein Ausführungsbeispiel zweier miteinander kommunizierender Terminals 6U und 3U, die sowohl über ein Parallel-Bussystem 5 (z.B. VMEbus) und ein Serienbussystem mit zwei Leitungen 6 und 7 miteinander verbunden sind.

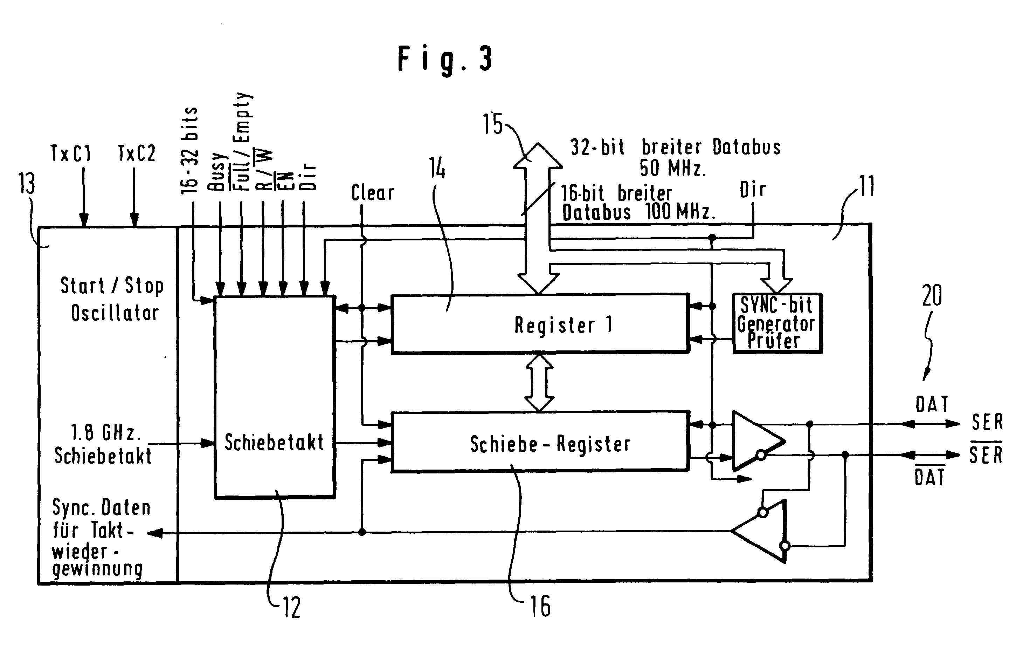

Mit 8a und 8b ist jeweils ein VMEbus Master/Slave Interface bezeichnet, über die unter Verwendung des Parallel-Bussystems 5 ein Verbindungsaufbau zwischen den zwei Terminals 6U und 3U hergestellt wird. Mit 9a und 9b ist jeweils eine Baugruppe bezeichnet (als "Autobahn-Interface" bezeichnet), die beispielsweise die Schaltungsanordnung nach Fig. 3 darstellt.

Mit 10a und 10b sind jeweils Leitungsabschlüsse bezeichnet.

Bei der Herstellung einer Kommunikationsverbindung zwischen dem Terminal 6U und 3U wird der einleitende Verbindungsaufbau über die Stufen 8a und 8b unter Verwendung des VMEbusses 5 hergestellt, wobei dann nach Herstellung des Verbindungsaufbaus beide Bussysteme gemäß den Bezugszeichen 5, 6 und 7 zur Übertragung von Daten verwendet werden können. Auf den Leitungen 6 und 7 werden die Daten dabei in seriellem Format übertragen, während die Daten auf dem VMEbus 5 in einem Parallelformat übertragen werden.

Fig. 3 zeigt ein weiteres Ausführungsbeispiel eines Hochgeschwindigkeits-Serien/Parallel- und Parallel/Serien-Wandlers nach der vorliegenden Erfindung. Dieser Wandler umfaßt im Prinzip zwei Funktionsblöcke 11 und 13, von denen der eine Funktionsblock 13 einen verzögerungsfrei arbeitenden Start/Stop-Oszillator enthält und von denen der andere Funktionsblock 11 eine interne Steuerlogik 12 enthält, die ein Belegtsignal (BUSY) bei Belegung des seriellen Busses 20 erzeugt.

Der Funktionsblock 11 enthält ein Register 1, welches mit einem 32 Bit breiten Datenbus (50 MHz) oder einem 16 Bit breiten Datenbus (100 MHz) verbunden ist. Das Register 1 ist mit einem Schieberegister 16 verbunden, welches im Sendebetrieb Daten im seriellen Format auf den Bus 20 ausgibt und im Empfangsbetrieb serielle Daten über den Bus 20 empfängt.

Das Register 1 und das Schieberegister 16 werden von einer internen Steuerlogik 12 gesteuert.

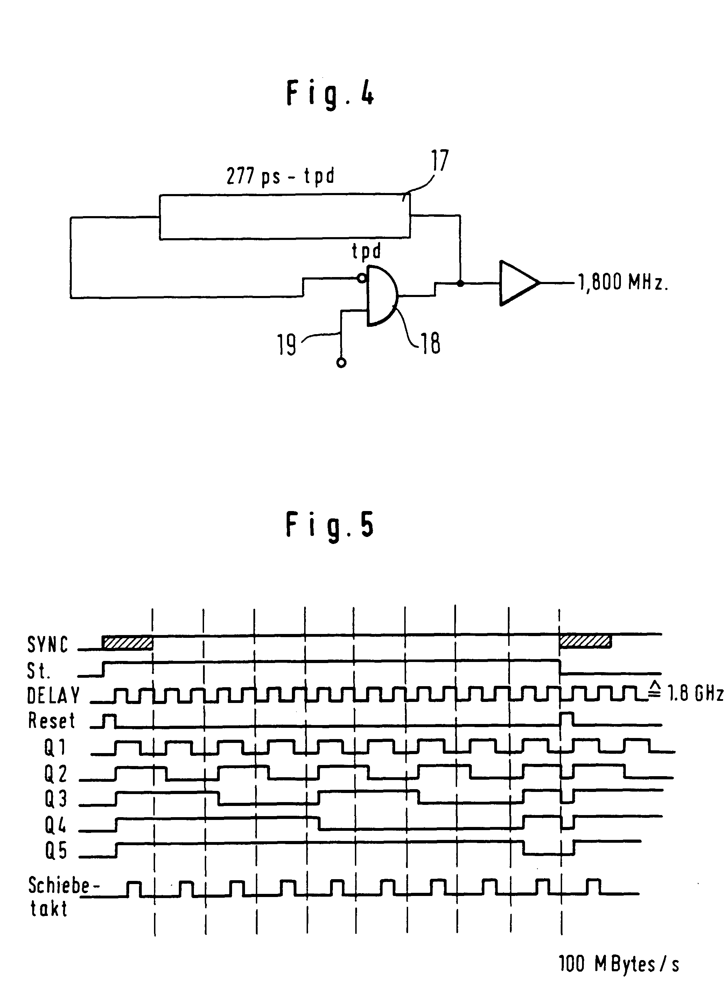

Der andere Funktionsblock 13 enthält einen Start/Stop-Oszillator, dessen Aufbau in Fig. 4 veranschaulicht ist. Der Start/Stop-Oszillator nach Fig. 4 umfaßt eine Verzögerungsleitung 17, die in der Praxis zweckmäßigerweise aus einer Leiterbahn bzw. Leitungsstreifen auf einer gedruckten Schaltungsplatte bestehen kann, wobei dieser Leitungsstreifen zweckmäßigerweise in einem meanderförmigen Muster angeordnet ist, um dadurch temperaturbedingte Laufzeitänderungen zu kompensieren.

Der Eingangsanschluß der Verzögerungsleitung 17 ist mit dem Ausgang eines UND-Gatters 18 verbunden, während der Ausgangsanschluß der Verzögerungsleitung 17 mit einem Negations-Eingang des UND-Gatters 18 verbunden ist. Das Gatter 18 weist ferner einen normalen Steuereingang 19 auf, dem ein Steuersignal zugeführt wird. Das Steuersignal wird mit Hilfe der in dem Funktionsblock 13 enthaltenen (nicht gezeigten) Aufbereitungsschaltung gewonnen und zwar aus den Synchronisationsbits, die jeweils am Ende eines Bytes in den seriellen Datenfluß eingefügt sind.

Der zeitliche Verlauf des Steuersignals St (siehe Fig. 5) ist derart eingestellt, daß das Steuersignal beispielsweise mit der Vorderflanke eines Synchronisierimpulses bzw. Synchronisierbits beginnt und kurz nach dem Ende der Übertragung eines Bytes endet (also beispielsweise nach 8 Schiebetaktimpulsen).

Da der Start/Stop-Oszillator nach Fig. 4 verzögerungsfrei und ohne Einschwingzeit arbeitet, kann somit eine Synchronisation immer nach der Übertragung eines Bytes vorgenommen werden.

Die mit Hilfe des Start/Stop-Oszillators erzeugte Signalfrequenz liegt bei dem gezeigten Ausführungsbeispiel im Giga-Hertzbereich, beispielsweise bei 1800 MHz.

Fig. 5 zeigt verschiedene Signalwellenformen, die bei der Schaltungsanordnung nach Fig. 2 jeweils auftreten. Die erste Zeile von Fig. 5 zeigt zwei aufeinanderfolgende Synchronisierimpulse.

Das Signal St der zweiten Zeile wird dem Eingangsanschluß 19 des Gatters 18 zugeführt.

Die dritte Zeile zeigt die Impulsfolge am Ausgang des Start/Stop-Oszillators (1, 8 GHz).

Die vierte Zeile stellt Rückstellsignale dar, während die Zeilen 5 bis 9 die in den (nicht gezeigten) Teilungsstufen des Funktionsblocks 13 auftretenden Signale wiedergeben. Die letzte Zeile der Fig. 5 zeigt schließlich die Folge des Schiebetaktes.

Die nicht näher gezeigten Teilungsstufen erfüllen ihre jeweilige Teilungsfunktion sowohl beim Sendebetrieb als auch beim Empfangsbetrieb.

Beim Sendebetrieb dienen sie dazu, die Taktfrequenz, mit welcher die Daten ausgegeben werden, einzustellen, während beim Empfangsbetrieb die Teilerstufen so ausgewählt bzw. eingestellt werden, daß sie der Taktfrequenz des empfangenen Datensignals entsprechen.

Der Funktionsblock 13 kann ferner auch eine Meßeinrichtung enthalten, um die Impulsfolgefrequenz der ankommenden Synchronisationsbits zu messen, wobei beispielsweise die Oszillatorimpulse des Start/Stop-Oszillators mitverwendet werden können. Abhängig vom jeweils erhaltenen Meßergebnis können dann die Teilerstufen automatisch selektiert bzw. deren Teilungsverhältnis eingestellt werden, um eine Anpassung der Baugruppe an die Folgefrequenz der ankommenden Datenfolge zu erreichen.

Da ferner bei dem Start/Stop-Oszillator der Fig. 4 die Leiterbahn sehr genau berechnet werden kann und in der Praxis auch sehr genau bemessen werden kann, hängen die Toleranzen dieses Oszillators im wesentlichen nur von den Toleranzen des verwendeten Gatters ab.

Es ist ferner auch offensichtlich, daß auch der Hochgeschwindigkeits-Serien/Parallel- und Parallel/Serien-Wandler der Fig. 3 in beiden Übertragungsrichtungen betrieben werden kann und auch mit allen erforderlichen logischen Bausteinen ausgestattet werden kann wie insbesondere MUX/DEMUX, verschiedenen Steuerlogikbausteinen, Zeitsteuerkreisen usw. Auch kann der Wandler nach Fig. 3 mit extern zugänglichen Steuerleitungen TxC1 und TxC2 ausgestattet sein, um verschiedene Taktfrequenzen bzw. einen verschiedenen Schiebetakt einstellen zu können wie beispielsweise 1800 MHz, 900 MHz und 450 MHz, wobei den genannten beiden Anschlüssen TxC1 TxC2 jeweils unterschiedliche oder gleiche Signale zugeführt werden gemäß der folgenden Tabelle:

| Datenübertragungsgeschwindigkeit | Schiebetaktfrequenz | TxC1 | TxC2 |
|---|---|---|---|
| 200 Mbytes/sec | 1800 MHz | 1 | 1 |
| 100 Mbytes/sec | 900 MHz | 0 | 1 |
| 50 Mbytes/sec | 450 MHz | 1 | 0 |
| reserviert | | 0 | 0 |

Eine weitere Möglichkeit aus einem ankommenden Datenstrom die Datenübertragungsrate zu ermitteln besteht darin, dem Datenstrom eine Präambel vorauszuschicken, welche sämtliche Informationen für die Einstellung des Teilungsverhältnis der Teilungsstufen enthält.

Für den Fachmann sind eine Reihe von Abwandlungen und Änderungen ohne weiteres durchführbar, ohne jedoch dadurch den Rahmen der vorliegenden Erfindung zu verlassen. So kann beispielsweise auch problemlos einer der genannten standardisierten Busse miteinander kombiniert werden, d.h. ein VMEbus kann mit einem Futurebus kombiniert werden, wobei die Leerleitungen in beiden Bussystemen als serieller Hochgeschwindigkeitsbus eingesetzt werden können. Auch können ohne weiteres andere bzw. mehrere serielle Kanäle innerhalb eines Rechnersystems im Sinne der vorliegenden Erfindung als Hochgeschwindigkeitsbus eingesetzt werden. Auch ist die vorliegende Erfindung nicht auf spezifische Rechnersysteme eingeschränkt. Das Hochgeschwindigkeits-Bussystem nach der vorliegenden Erfindung kann auch bei anderen Einrichtungen, wie beispielsweise Faksimilesystemen, Hochleistungskopiergeräten usw. erfolgreich realisiert werden.

**Patentansprüche**

1. Verfahren zum Betreiben eines Hochgeschwindigkeits-Bussystems, bei dem wenigstens ein Parallelbus und wenigstens ein serieller Bus zur gleichzeitigen parallelen und seriellen Datenübertragung kombiniert werden, um serielle erste Daten über den wenigstens einen seriellen Bus und parallele zweite Daten über den wenigstens einen parallelen. Bus gleichzeitig zu übertragen, wobei der serielle Datentransfer der ersten Daten nach einem Verbindungsaufbau abläuft und gleichzeitig parallel auf dem Parallelbus die normale Übertragung der zweiten Daten und/oder Programmen durchgeführt wird und wobei der Verbindungsaufbau für sowohl die parallele als auch die serielle Datenübertragung unter Verwendung der dem parallelen Bus zugeordneten Logik erfolgt.

2. Verfahren nach Anspruch 1,
dadurch **gekennzeichnet,** daß zu Beginn eines Verbindungsaufbaus gemäß einer Einzelübertragung (Datenwort) unter einer zugehörigen Adresse über den seriellen Bus, nach Selektierung eines angesprochenen Moduls und nach Übergabe einer Speicheradresse ein Freigabesignal (DTACK-Signal) von dem Modul zur sofortigen Freigabe des Parallelbusses erzeugt wird, um noch während der seriellen Datenübertragung den Parallelbus für eine von der seriellen Übertragung unabhängige, zeitlich parallel laufende Parallel-Übertragung von Daten bereit zu machen.

3. Verfahren nach Anspruch 1,
dadurch **gekennzeichnet,** daß zur Blockübertragung gemäß einem Protokoll die beim Verbindungsaufbau übertragenen parallelen Daten alle erforderlichen Informationen für den seriellen Transfer, wie Startadresse, Blocklänge usw. enthalten, wobei die Blockübertragung ausschließlich über den seriellen Bus erfolgt.

4. Hochgeschwindigkeits-Bussystem, mit wenigstens einem Parallelbus und wenigstens einem seriellen Bus zur gleichzeitigen parallelen und seriellen Datenübertragung zwischen Teilnehmern und mit einer dem wenigstens einen Parallelbus zugeordneten Logik, wobei der serielle Datentransfer nach einem Verbindungsaufbau abläuft und zeitlich parallel auf dem wenigstens einen Parallelbus die normale Übertragung von Daten und/oder Programmen durchgeführt wird,
dadurch **gekennzeichnet,** daß die Logik des wenigstens einen Parallelbusses dafür ausgebildet ist, einen Verbindungsaufbau für sowohl die parallele als auch die serielle Datenübertragung herzustellen.

**5.** Hochgeschwindigkeits-Bussystem nach Anspruch 4,
dadurch **gekennzeichnet,** daß der Parallelbus aus einem standardisierten VMEbus, einem standardisierten Futurebus oder einem Multibus II besteht und daß wenigstens eine der normalerweise nicht benutzten Leitungen dieser Busse einen seriellen Hochgeschwindigkeitsbus bildet.

**6.** Hochgeschwindigkeits-Bussystem nach Anspruch 4 oder 5, **gekennzeichnet** durch einen Hochgeschwindigkeits-Serien/Parallel- und Parallel/Serien-Wandler (1), der zwischen einen Parallelbus (DO...DO7) und einen seriellen Bus (2) geschaltet ist.

**7.** Hochgeschwindigkeits-Bussystem nach Anspruch 6,
dadurch **gekennzeichnet,** daß der Hochgeschwindigkeits-Serien/-Parallel- und Parallel/SerienWandler (1) zwei Funktionsblöcke (3, 4) aufweist, von denen der eine Funktionsblock (4) aus einem Prescaler, einem spannungsgesteuerten Oszillator (VCO) und einer phasenstarren Schleife (PLL) besteht und von denen der andere Funktionsblock (3) eine interne Steuerlogik enthält, die ein Belegtsignal (BUSY) bei Belegung des seriellen Busses (2) erzeugt.

**8.** Hochgeschwindigkeits-Bussystem nach einem der Ansprüche 4 bis 7 mit mehreren jeweils mit einem Bussystem ausgestatteten Teilnehmer,
dadurch **gekennzeichnet,** daß jeder Teilnehmer mit einem eigenen Hochgeschwindigkeits-Serien/Parallel- und Parallel/Serien-Wandler (1) ausgestattet ist, wobei alle Teilnehmer das Belegtsignal (BUSY) generieren und damit konkret erkennen können, ob sie aktiv einen Verbindungsaufbau einleiten können oder nicht.

**9.** Hochgeschwindigkeits-Bussystem nach einem der Ansprüche 6 bis 8,
dadurch **gekennzeichnet,** daß die Empfangsdaten des anderen Funktionsblockes (3) als Synchronisierdaten zur Synchronisierung der phasenstarren Schleife (PLL) und des spannungsgesteuerten Oszillators (VCO) an den einen Funktionsblock (4) übertragbar sind.

**10.** Hochgeschwindigkeits-Bussystem nach Anspruch 6,
dadurch **gekennzeichnet,** daß der Hochgeschwindigkeits-Serien/Parallel- und Parallel/Serien-Wandler zwei Funktionsblöcke (11, 13) aufweist, von denen der eine Funktionsblock (13) einen verzögerungsfrei anschwingenden Start/Stop-Oszillator (Fig. 4) und von denen der andere Funktionsblock (11) eine interne Steuerlogik (12) enthält, die ein Belegtsignal (BUSY) bei Belegung des seriellen Busses (20) erzeugt.

**11.** Hochgeschwindigkeits-Bussystem nach Anspruch 10
dadurch **gekennzeichnet,** daß der Start/Stop-Oszillator (Fig. 4) ein steuerbares Gatter (18) und eine Verzögerungsleitung (17) aufweist, die mit ihrem einen Anschluß an den Ausgang des Gatters (18) und die mit ihrem anderen Anschluß mit einem ersten Eingang des Gatters (18) verbunden ist, wobei das Gatter (18) an wenigstens einem zweiten Eingagsanschluß (19) ein Steuersignal empfängt.

**12.** Hochgeschwindigkeits-Bussystem nach Anspruch 11,
dadurch **gekennzeichnet**, daß der mit dem anderen Anschluß der Verzögerungsleitung (17) verbundene erste Eingangsanschluß des Gatters (18) ein Negations-Eingang ist und daß der wenigstens eine zweite Eingangsanschluß (19) ein normaler nicht invertierender Eingang ist.

**13.** Hochgeschwindigkeits-Bussystem nach einem der Ansprüche 10 bis 12, dadurch **gekennzeichnet**, daß das dem wenigstens einen zweiten Eingangsanschluß (19) des Gatters (18) zugeführte Signal den Start/Stop-Oszillator (Fig.4) startet und aus einem Synchronisiersignal (Synchronisierbit) abgeleitet ist, das jeweils nach der Übertragung eines Bytes einmal auftritt bzw. mit dem Datenfluß mit übertragen wird.

**14.** Hochgeschwindigkeits-Bussystem nach einem der Ansprüche 10 bis 13, dadurch **gekennzeichnet**, daß die Verzögerungsleitung (17) als Leitungsstreifen auf einer gedruckten Schaltungsplatte ausgebildet ist.

**15.** Hochgeschwindigkeits-Bussystem nach Anspruch 14,
dadurch **gekennzeichnet**, daß der Leitungsstreifen auf der Schaltungsplatte in einem meanderförmigen Muster angeordnet ist.

**16.** Hochgeschwindigkeits-Bussystem nach Anspruch 13,
**gekennzeichnet** durch eine Aufbereitungsschaltung, welche aus einem einzelnen Synchronisierimpuls ein Steuersignal (St) erzeugt, dessen zeitlicher Verlauf mit der Vorderflanke des Synchronisierimpulses (Synchronisierbits) beginnt und kurz nach dem Ende der Übertragung eines Bytes endet.

17. Hochgeschwindigkeits-Bussystem nach einem der Ansprüche 10 bis 16, dadurch **gekennzeichnet,** daß der Start/ stop-Oszillator (Fig.4) so ausgelegt ist, daß die von ihm erzeugte Impulsfolgefrequenz im Giga-Hertzbereich liegt.

18. Hochgeschwindigkeits-Bussystem nach Anspruch 17, dadurch **gekennzeichnet,** daß die Impulsfolgefrequenz 1,8 GHz beträgt.

19. Hochgeschwindigkeits-Bussystem nach einem der Ansprüche 10 bis 18, **gekennzeichnet** durch eine die Synchronisierimpulsfolge messende Einrichtung, welche die Impulsfolgefrequenz der Synchronisierimpulse (Synchronisierbits) mit Hilfe der Oszillatorimpulse des Start/Stop-Oszillators (Fig.4) mißt und automatisch abhängig vom Meßergebnis die Schiebetaktfrequenz einstellt.

20. Hochgeschwindigkeits-Bussystem nach Anspruch 19, dadurch **gekennzeichnet**, daß die die Synchronisierimpulsfolgefrequenz messende Einrichtung mehrere steuerbare Teilerstufen aufweist, deren Teilungsverhältnis einstellbar ist.

21. Hochgeschwindigkeits-Bussystem nach Anspruch 19, dadurch **gekennzeichnet**, daß einer zu übertragenden Datenfolge eine Präambel vorgesetzt ist, welche Informationen hinsichtlich der Datenübertragungsrate enthält.

## Claims

1. Method for operating a high-speed bus system wherein at least one parallel bus and at least one serial bus are combined for simultaneous parallel and serial data transfer in order to transmit first serial data over the at least one serial bus and transmit second parallel data over the at least one parallel bus simultaneously, the serial data transfer of the first data taking place after a connection setup and, at the same time, the normal transfer of the second data and/or programs taking place on the parallel bus and the connection setup for both the parallel and the serial data transfer taking place using the logic circuitry allocated to the parallel bus.

2. Method according to Claim 1, **characterised** in that at the start of a connection setup using a single transmission (data word) under an appropriate address via the serial bus, after selecting an addressed module and after transferring a memory address, an enabling signal (DTACK signal) is generated by the module to immediately enable the parallel bus so that, while serial date transfer is still in progress, the parallel bus is made ready for a parallel transfer of data which takes place at the same time as the serial transfer but is independent of it.

3. Method according to Claim 1, **characterised** in that, for block transfer in accordance with a protocol, the parallel data transferred during the connection setup contains all the necessary information for serial transfer such as start address, block length, etc., the block transfer taking place exclusively via the serial bus.

4. High-speed bus system with at least one parallel bus and at least one serial bus for simultaneous parallel and serial data transfer between subscribers and with a logic circuitry allocated to the at least one parallel bus, the serial data transfer taking place after a connection setup and, at the same time, the normal transfer of data and/or programs taking place on the at least one parallel bus, **characterised** in that the logic circuitry of the at least one parallel bus is designed to establish a connection setup for both the parallel and the serial data transfer.

5. High-speed bus system according to Claim 4, **characterised** in that the parallel bus consists of a standardized VMEbus, a standardized Futurebus or a Multibus II and in that at least one of the lines of these buses that are normally not used forms a high-speed serial bus.

6. High-speed bus system according to claim 4 or 5, **characterised** by a high-speed serial/parallel and parallel/serial converter (1) inserted between a parallel bus (D0...D07) and a serial bus (2).

EP 0 596 954 B1

7. High-speed bus system according to Claim 6,
**characterised** in that the high-speed serial/parallel and parallel/serial converter (1) has two functional units (3, 4) of which one functional unit (4) consists of a prescaler, a voltage-controlled oscillator (VCO) and a phase-locked loop (PLL) and of which the other functional unit (3) contains an internal control logic circuitry which generates a busy signal (BUSY) when the serial bus (2) is occupied.

8. High-speed bus system according to one of Claims 4 to 7 with several subscribers each equipped with a bus system, **characterised** in that each subscriber is equipped with his own high-speed serial/parallel and parallel/serial converter (1), all subscribers being able to generate the busy signal (BUSY) and therewith being able to detect specifically whether or not they can actively initiate a connection setup.

9. High-speed bus system according to one of Claims 6 to 8, **characterised** in that the received data of the other functional unit (3) can be transmitted as synchronizing data to the one functional unit (4) in order to synchronise the phase-locked loop (PLL) and the voltage-controlled oscillator (VCO).

10. High-speed bus system according to Claim 6,
**characterised** in that the high-speed serial/ parallel and parallel/serial converter has two functional units (11, 13) of which the one functional unit (13) contains a no-delay response start/stop oscillator (Fig. 4) and of which the other functional unit (11) contains an internal control logic circuitry (12) that generates a busy signal (BUSY) when the serial bus (20) is occupied.

11. High-speed bus system according to Claim 10,
**characterised** in that the start/stop oscillator (Fig. 4) has a controllable gate (18) and a delay line (17), one terminal of which is connected to the output of gate (18) and the other terminal of which is connected to a first input of gate (18), gate (18) receiving a control signal at at least one second input terminal (19).

12. High-speed bus system according to Claim 11,
**characterised** in that the first input terminal of gate (18) connected to the other terminal of delay line (17) is a negating input and the at least one second input terminal (19) is a normal non-inverting input.

13. High-speed bus system according to one of Claims 10 to 12, **characterised** in that the signal applied to the at least one second input terminal (19) of gate (18) starts the start/stop oscillator (Fig. 4) and is derived from a synchronizing signal (synchronizing bit) that occurs once after each byte is transferred or is transmitted with the data flow.

14. High-speed bus system according to one of Claims 10 to 13, **characterised** in that the delay line (17) is formed as a stripline on a printed circuit board.

15. High-speed bus system according to Claim 14,
**characterised** in that the stripline on the printed circuit board is arranged in a meandering pattern.

16. High-speed bus system according to Claim 13,
**characterised** by a signal conditioning circuit that generates from a single synchrqnizing pulse a control signal (St) of which the time duration starts with the leading edge of the synchronizing pulse (synchronizing bit) and ends shortly after a byte has been transferred.

17. High-speed bus system according to one of Claims 10 to 16, **characterised** in that the start/stop oscillator (Fig. 4) is designed so that the pulse repetition frequency generated by it is in the gigahertz range.

18. High-speed bus system according to Claim 17,
**characterised** in that the pulse repetition frequency is 1.8 GHz.

19. High-speed bus system according to one of Claims 10 to 18, **characterised** by a device for measuring the synchronizing pulse train which measures the pulse repetition frequency of the synchronizing pulses (synchronizing bits) using the oscillator pulses of the start/stop oscillator (Fig. 4) and which adjusts the shift clock frequency automatically depending on the measurement result.

20. High-speed bus system according to Claim 19,

**characterised** in that the device for measuring the synchronizing pulse repetition frequency consists of several controllable dividing stages whose division ratio can be adjusted.

21. High-speed bus system according to Claim 19,
**characterised** in that a data sequence to be transferred is preceded by a preamble which contains information regarding the data transfer rate.

**Revendications**

1. Procédé d'exploitation d'un système de bus à haute vitesse, dans lequel au moins un bus parallèle et au moins un bus série sont combinés pour un transfert de données simultané en parallèle et en série, pour transférer simultanément des premières données sérielles sur au moins un bus série et des deuxièmes données parallèles sur au moins un bus parallèle, le transfert de données sériel des premières données se déroulant selon un établissement de liaison, et le transfert normal des deuxièmes données et/ou de programmes étant effectué en même temps, en parallèle sur le bus parallèle, et l'établissement de liaison étant réalisé pour le transfert de données parallèle ainsi que sériel à l'aide d'une logique affectée au bus parallèle.

2. Procédé selon la revendication 1, caractérisé en ce qu'au début d'un établissement de liaison selon un transfert individuel (mot de données) sous une adresse associée sur le bus série, après la sélection d'un module adressé et après le transfert d'une adresse de stockage, le module produit un signal de libération pour la libération immédiate du bus parallèle pour préparer le bus parallèle, encore pendant le transfert sériel, pour le transfert de données parallèle, chronologiquement parallèle au, et indépendant du transfert sériel.

3. Procédé selon la revendication 1, caractérisé en ce que, pour un transfert de bloc selon un protocole, les données parallèles transférées au cours de l'établissement de liaison contiennent toutes les informations nécessaires pour le transfert sériel, comme l'adresse de départ, la longueur de bloc, etc., le transfert de bloc étant effectué exclusivement sur le bus série.

4. Système de bus à haute vitesse, avec au moins un bus parallèle et au moins un bus série pour un transfert de données simultané en parallèle et en série entre des terminaux et avec une logique affectée à au moins un bus parallèle, le transfert de données sériel se déroulant selon un établissement de liaison, et chronologiquement en parallèle sur au moins un bus parallèle, le transfert normal de données et/ou de programmes étant effectué, caractérisé en ce que la logique d'au moins un bus parallèle est réalisée pour créer un établissement de liaison pour le transfert aussi bien parallèle que sériel.

5. Système de bus à haute vitesse selon la revendication 4, caractérisé en ce que le bus parallèle se compose d'un bus VME standard, d'un bus futur standard et d'un multibus II, et en ce qu'au moins une des lignes normalement non utilisées de ces bus forme un bus série à haute vitesse.

6. Système de bus à haute vitesse selon la revendication 4 ou 5, caractérisé par un convertisseur à haute vitesse série/parallèle et parallèle/série (1) qui est placé entre un bus parallèle (DO ... DO7) et un bus série (2).

7. Système de bus à haute vitesse selon la revendication 6, caractérisé en ce que le convertisseur à haute vitesse série/parallèle et parallèle/série (1) présente deux blocs de fonction (3, 4) dont un bloc de fonction (4) comprend un diviseur préalable, un oscillateur commandé par tension (VCO) et une boucle à verrouillage de phase (PLL) et dont l'autre bloc de fonction (3) contient une logique de commande interne qui produit un signal d'occupation (BUSY) en cas d'occupation du bus série (2).

8. Système de bus à haute vitesse selon l'une quelconque des revendications 4 à 7, avec plusieurs terminaux, chacun équipé d'un système de bus, caractérisé en ce que chaque terminal est équipé de son propre convertisseur à haute vitesse série/parallèle et parallèle/série (1), tous les terminaux générant le signal d'occupation (BUSY) et pouvant ainsi reconnaître concrètement s'ils peuvent oui ou non activement entamer un établissement de liaison.

9. Système de bus à haute vitesse selon l'une quelconque des revendications 6 à 8, caractérisé en ce que les données reçues de l'autre bloc de fonction (3) peuvent être transmises au bloc de fonction (4) en tant que données de synchronisation pour synchroniser la boucle à verrouillage de phase (PLL) et l'oscillateur commandé par tension (VCO).

**10.** Système de bus à haute vitesse selon la revendication 6, caractérisé en ce que le convertisseur à haute vitesse série/parallèle et parallèle/série présente deux blocs de fonction (11, 13), dont un bloc de fonction (13) contient un oscillateur asynchrone à amorçage immédiat (figure 4) et dont l'autre bloc de fonction (11) contient une logique de commande interne (12), qui produit un signal d'occupation (BUSY) en cas d'occupation du bus série (20).

**11.** Système de bus à haute vitesse selon la revendication 10, caractérisé en ce que l'oscillateur asynchrone (figure 4) présente une porte réglable (18) et une ligne de temporisation (17) dont une des connexions est reliée à la sortie de la porte (18) et dont l'autre connexion est reliée à la première entrée de la porte (18), la porte (18) recevant un signal de commande à au moins une deuxième connexion d'entrée (19).

**12.** Système de bus à haute vitesse selon la revendication 11, caractérisé en ce que la première connexion d'entrée de la porte (18), reliée à l'autre connexion de la ligne de temporisation (17), est une entrée de négation et en ce qu'au moins une deuxième connexion d'entrée (19) est une entrée normalement non inversée.

**13.** Système de bus à haute vitesse selon l'une quelconque des revendications 10 à 12, caractérisé en ce que le signal amené au moins à la deuxième connexion d'entrée (19) de la porte (18) met en marche l'oscillateur asynchrone (figure 4) et est dérivé d'un signal de synchronisation (binaire de synchronisation) qui apparaît respectivement une fois après le transfert d'un octet ou est transféré avec le flux de données.

**14.** Système de bus à haute vitesse selon l'une quelconque des revendications 10 à 13, caractérisé en ce que la ligne de temporisation (17) est réalisée comme une nappe de lignes sur une plaquette à circuits imprimés.

**15.** Système de bus à haute vitesse selon la revendication 14, caractérisé en ce que la nappe de lignes sur la plaquette à circuit imprimé est disposée selon un motif en forme de méandre.

**16.** Système de bus à haute vitesse selon la revendication 13, caractérisé en ce qu'un circuit de mise en forme, qui produit à partir d'une seule impulsion de synchronisation un signal de commande (St) dont le déroulement chronologique commence par la partie croissante de l'impulsion de synchronisation (binaires de synchronisation) et se termine peu de temps après la fin du transfert d'un octet.

**17.** Système de bus à haute vitesse selon l'une quelconque des revendications 10 à 16, caractérisé en ce que l'oscillateur asynchrone (figure 4) est disposé de telle sorte que la fréquence de récurrence des impulsions produite par celui-ci se trouve dans la gamme des giga-hertz.

**18.** Système de bus à haute vitesse selon la revendication 17, caractérisé en ce que la fréquence de récurrence des impulsions s'élève à 1,8 GHz.

**19.** Système de bus à haute vitesse selon l'une quelconque des revendications 10 à 18, caractérisé par un dispositif mesurant la récurrence d'impulsions de synchronisation qui mesure la fréquence de récurrence des impulsions des impulsions de synchronisation (binaires de synchronisation) à l'aide des impulsions d'oscillateur de l'oscillateur asynchrone (figure 4) et règle automatiquement la fréquence élémentaire de décalage en fonction du résultat de mesure.

**20.** Système de bus à haute vitesse selon la revendication 19, caractérisé en ce que le dispositif mesurant la fréquence de récurrence des impulsions de synchronisation présente plusieurs étages de diviseur réglables dont le rapport de division est réglable.

**21.** Système de bus à haute vitesse selon la revendication 19, caractérisé en ce qu'un préambule précède une séquence de données à transférer, préambule qui contient des informations concernant le taux de transfert des données.

# Fig.1

EP 0 596 954 B1

Fig. 2

# Fig. 3

TxC1  TxC2

13

Start / Stop
Oscillator

1.8 GHz.
Schiebetakt

Sync. Daten
für Taktwiedergewinnung

16-32 bits
Busy
Full / Empty
R / W
EN
Dir

Clear

14

15

32-bit breiter Databus
50 MHz.

16-bit breiter
Databus 100 MHz.

Dir

11

20

Schiebetakt

Register 1

SYNC-bit
Generator
Prüfer

Schiebe-Register

DAT

SER

$\overline{SER}$

$\overline{DAT}$

12

16

EP 0 596 954 B1

# Fig.4

277 ps - tpd

17

tpd

19

18

1,800 MHz.

# Fig.5

SYNC
St.
DELAY                                    ≙ 1.8 GHz
Reset
Q 1
Q 2
Q 3
Q 4
Q 5
Schiebetakt

100 M Bytes / s